# EUROPEAN PATENT APPLICATION

(11) **EP 2 685 785 A1**
(43) Date of publication of application: **15.01.2014**
(21) Application number: 12183975.7
(22) Date of filing: 12.09.2012
(51) Int. Cl.: H05B 33/08, H05B 37/02

(54) **Lighting control system**

(30) Priority: 10.07.2012 JP 2012154655
(71) Applicant: Toshiba Lighting & Technology Corporation, Yokosuka-shi Kanagawa 237-8510 (JP)
(72) Inventor: Iwai, Naoko, Kanagawa, 237-8510 (JP); Shimizu, Keiichi, Kanagawa, 237-8510 (JP); Kawagoe, Makoto, Kanagawa, 237-8510 (JP); Sasai, Toshihiko, Kanagawa, 237-8510 (JP); Kudo, Hiroyuki, Kanagawa, 237-8510 (JP); Ishiwata, Tomoko, Kanagawa, 237-8510 (JP); Kitagawa, Toshitake, Kanagawa, 237-8510 (JP); Kawano, Hitoshi, Kanagawa, 237-8510 (JP); Kumashiro, Shinichi, Kanagawa, 237-8510 (JP)
(74) Representative: Bokinge, Ole

(57) **Abstract**

In an embodiment, a lighting control system (10) includes a plurality of lighting apparatuses (5) and a central control device (100). In an embodiment, the central control device (100) controls lighting states of the plurality of lighting apparatuses (5), based on a first illumination which is an illumination of an irradiated surface irradiated by the plurality of lighting apparatuses (5), and a second illumination which is an illumination at a certain measurement point in a lighting space irradiated by light sources of the plurality of lighting apparatuses (5) and is formed by a reflected light of light emitted by the lighting apparatuses (5).

## Description

### FIELD

Embodiments described herein relate generally to a lighting control system.

### BACKGROUND

In the related art, there is a lighting control system which controls an illumination of a desktop or a floor at a certain level using an illumination sensor. For example, in an lighting control system, the illumination sensor is placed in a position facing a specific lighting apparatus, and a lighting state of the specific lighting apparatus is controlled based on brightness that is detected by the illumination sensor. When describing a more detailed example, in the lighting control system, the lighting apparatus which illuminates the desktop is controlled so that illumination of the desktop becomes a reference value.

### DESCRIPTION OF THE DRAWINGS

Fig. 1 is a block diagram that illustrates an example of an overall configuration of a lighting control system according to a first embodiment.
Fig. 2 is a diagram that illustrates an example of a first lighting apparatus and a second lighting apparatus in the first embodiment.
Fig. 3 is a diagram that illustrates an example of an optical sensor in the first embodiment.
Fig. 4 is a block diagram that illustrates an example of a configuration of a central control device according to the first embodiment.
Fig. 5 is a diagram that illustrates an example of image information for detecting a second illumination in the first embodiment.
Fig. 6 is a flow chart that illustrates an example of a flow of a control processing using the central control device according to the first embodiment.
Fig. 7 is a diagram that describes an example of a second illumination calculation method.
Fig. 8 is a diagram that illustrates an example of a feedback circuit.

### DETAILED DESCRIPTION

According to one embodiment, an lighting control system includes a plurality of lighting apparatuses and a central control device. The central control device include a control processing portion. The control processing portion controls lighting states of the plurality of lighting apparatuses based on a first illumination and a second illumination. The first illumination is an illumination of an irradiated surface irradiated by the plurality of lighting apparatuses. The second illumination is an illumination at a certain measurement point in a lighting space irradiated by light sources of the plurality of lighting apparatuses and the second illumination and is formed by a reflected light of light emitted by the lighting apparatuses.

According to an embodiment, a lighting control system according to exemplary embodiments described below includes a plurality of lighting apparatuses and a central control device. The central control device includes a control processing portion that controls the lighting states of the plurality of lighting apparatuses based on a first illumination which is illumination of an irradiation surface irradiated by the plurality of lighting apparatuses and a second illumination which is an illumination at a certain measurement point of a lighting space irradiated by light sources of the plurality of lighting apparatuses and is formed by a reflective light of light emitted by the lighting apparatuses.

Furthermore, according to an embodiment, in the lighting control system according to the exemplary embodiments, a first lighting apparatus of the plurality of lighting apparatuses irradiates a desktop or a floor surface, and a second lighting apparatus of the plurality of lighting apparatuses irradiates a ceiling surface or a wall surface. Furthermore, the control processing portion controls the lighting states of the first lighting apparatus and the second lighting apparatus, based on the first illumination which is the illumination of the desktop or the floor surface and the second illumination which is the illumination of the wall surface.

Furthermore, according to an embodiment, in the lighting control system according to the exemplary embodiments, the central control device further includes a storage portion that stores a first reference value of the first illumination. Furthermore, the control processing portion controls the lighting state of the first lighting apparatus so that the first illumination becomes the first reference value, and controls the lighting state of the second lighting apparatus of the plurality of lighting apparatuses based on a second reference value decided on the basis of the first illumination.

Furthermore, according to an embodiment, in the lighting control system according to the exemplary embodiments, the central control portion further includes a storage portion that stores the second reference value of the second illumination. Furthermore, the control processing portion controls the lighting state of the second lighting apparatus of the plurality of lighting apparatuses so that the second illumination becomes the second reference value, and controls the lighting state of the first lighting apparatus based on the first reference value decided on the basis of the second illumination.

Furthermore, according to an embodiment, in the lighting control system according to the exemplary embodiments further includes a first optical sensor for measuring the first illumination, and a second optical sensor for measuring the second illumination. Furthermore, the control processing portion controls the lighting states of the plurality of lighting apparatuses, based on the first illumination received from the first optical sensor and the second illumination received from the second optical sensor.

Furthermore, according to an embodiment, the lighting control system according to the exemplary embodiments further includes an image sensor for measuring the first illumination and the second illumination. Furthermore, the control processing portion sets the illumination calculated based on a pixel value of a partial image corresponding to the irradiation surface of the images that are captured by the image sensor as the first illumination, sets the illumination calculated based on a pixel value of a partial image except a portion corresponding to the irradiation surface and direct light of the plurality of lighting apparatuses as the second illumination, and controls the lighting states of the plurality of lighting apparatuses.

Furthermore, according to an embodiment, the lighting control system according to the exemplary embodiments further includes a second illumination calculation portion that calculates the second illumination, by subtracting the illumination at the measurement point caused by the direct light due to the light sources of the plurality of lighting apparatuses from the illumination at the measurement point based on the direct light and the reflected light due to the light sources of the plurality of lighting apparatuses. Furthermore, the control processing portion controls the lighting states of the plurality of lighting apparatuses based on the first illumination and the second illumination calculated by the second illumination calculation portion.

Hereinafter, a lighting control system according to the exemplary embodiments will be described with reference to the drawings. Configurations having the same functions in the embodiment are denoted by the same reference numerals and the repeated descriptions will be omitted. In addition, the lighting control system described in the embodiment mentioned below simply illustrates an example thereof but does not limit the exemplary embodiment. Furthermore, the embodiment mentioned below may be suitably combined with each other within the non-contradiction range.

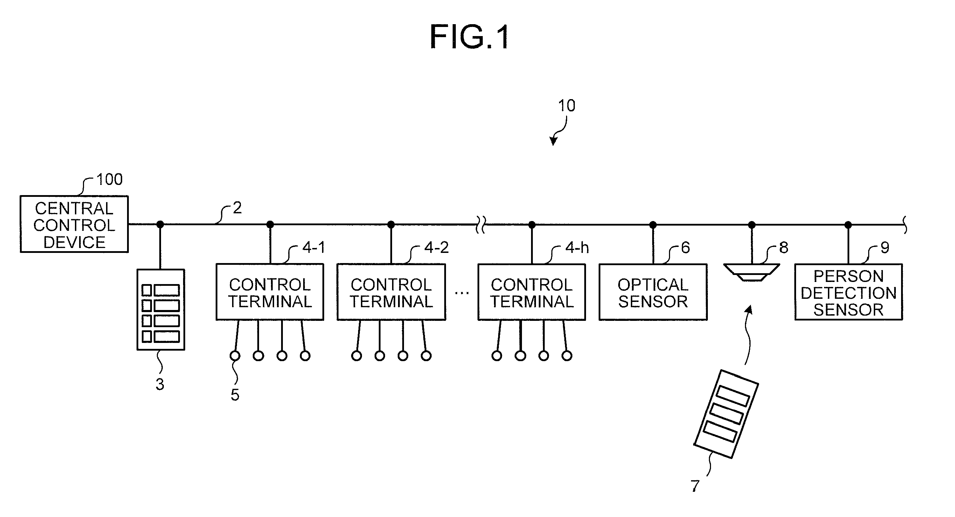

Fig. 1 is a block diagram that illustrates an example of an overall configuration of a lighting control system according to a first embodiment. In the example shown in Fig. 1, a lighting control system 10 includes a central control device 100, a two-line transmission line (also referred to as a "transmission line") 2, a wall switch 3, an h number of control terminals 4, a lighting apparatus 5, an optical sensor 6, a wireless transmitter 7, a wireless receiver 8, and a person detection sensor 9. The respective devices of the lighting control system 10 are connected to each other via the transmission line 2. In addition, in an example shown in Fig. 1, although a case is described where the number of the control terminal 4 is h, the number may be arbitrary without being limited thereto.

The central control device 100 remotely controls the lighting apparatuses 5 installed on lighting areas such as an office and various facilities. Furthermore, the central control device 100 controls the lighting states of the plurality of lighting apparatuses 5. Since the details of the central control device 100 will be described later, the description thereof will be omitted.

The wall switch 3 receives an operation of the lighting apparatus from a user and outputs the received operation contents to the central control device 100 via the transmission line 2. For example, the wall switch 3 receives the operation of lighting off the lighting apparatus, the operation of lighting on the lighting apparatus, the operation of changing brightness or the like, and outputs the received operation to the central control device 100.

The control terminal 4 is connected to the lighting apparatus 5. The example shown in Fig. 1 illustrates a case where a control terminal 4-1 to a control terminal 4-h can be each connected to the lighting apparatuses 5 of four circuits. However, the lighting apparatuses of the arbitrary numbers may be connected, without being limited thereto.

For example, the plurality of lighting apparatuses 5 include a light emitting diode (LED) as a light source. Hereinafter, a case will be described where the plurality of lighting apparatuses 5 include the first lighting apparatus which irradiates the desktop or the floor surface, and the second lighting apparatus which irradiates the ceiling or the wall surface.

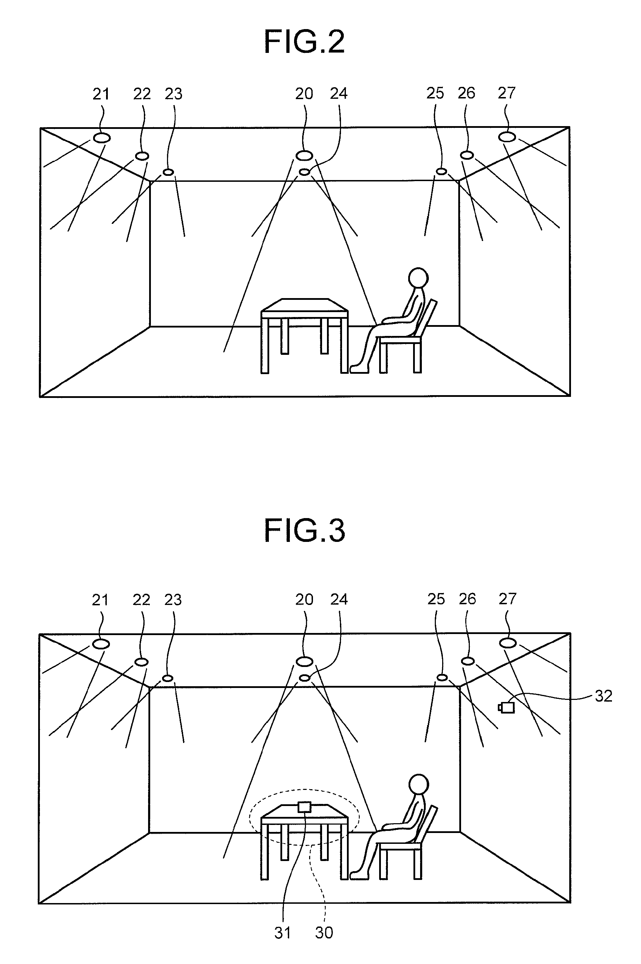

Fig. 2 is a diagram that illustrates an example of the first lighting apparatus and the second lighting apparatus in the first embodiment. In the example shown in Fig. 2, a lighting apparatus 20, which irradiates hands of a user, a desktop, and a wall surface from a ceiling, corresponds to the first lighting apparatus, and lighting apparatuses 21 to 27, which irradiate a wall surface of a room from the ceiling, correspond to the second lighting apparatus. In addition, hereinafter, although a case will be described where the second lighting apparatus irradiates the ceiling surface or the wall surface, but the embodiment is not limited thereto. For example, the second lighting apparatuses may be arbitrary lighting apparatuses which irradiate a portion different from the irradiation surface using the first lighting apparatus.

In addition, in the example shown in Fig. 2, a case is described where the number of the first lighting apparatus is 1 and the number of the second lighting apparatuses is 7, the numbers thereof may be arbitrary, without being limited thereto. Furthermore, although the example shown in Fig. 2 illustrates a case where the first lighting apparatus and the second lighting apparatuses are provided in the ceiling, the lighting apparatuses may be provided on the wall surface and may be provided in an arbitrary location, without being limited thereto.

The optical sensor 6 detects the brightness. The optical sensor 6 includes a first optical sensor for detecting the first illumination which is the illumination of the irradiation surface irradiated by the light source of the first lighting apparatus, and a second optical sensor for detecting the second illumination which is the illumination at a certain measurement point in the lighting space irradiated by the light sources of the plurality of lighting apparatuses and is formed by the reflected light irradiated by the lighting apparatus. In addition, the first illumination is defined as a "horizontal surface illumination" indicating luminous flux per unit area incident to the floor and the desk, and may be referred to as a "desk upper surface illumination", a "floor surface illumination" or the like. Furthermore, the second illumination may be defined as an illumination generated due to an indirect light in an observation set point in a vertical surface assumed at a position of eyes, and in this case, the second illumination may be referred to as an "indirect eye front illumination", a "Weluna value" or the like. For example, the second illumination may indicate the illumination based on the indirect light reaching by being reflected by the wall, the floor surface, the ceiling surface or the like, of light reaching the eyes of a user. Furthermore, the second illumination may be defined as the illumination at a certain measurement point due to the reflective light from the reflection surface of a predetermined space partitioned by the wall, the floor surface, the ceiling surface or the like. In this case, it is preferable to set the vicinity of the entrance or the vicinity of the boundary of the space such as a wall surface as the measurement point so that the contribution of the indirect light from the entire space is reflected. Furthermore, in the first embodiment, for convenience of description, a case is described where the certain measurement point is in a position where the second optical sensor is provided.

Herein, the value detected by the optical sensor 6 may be the first illumination or the second illumination, and the value calculated by the central control device 100 based on the detection result using the optical sensor 6 may be the first illumination or the second illumination. For example, when the optical sensor 6 is an illumination sensor and is installed on the irradiation surface irradiated by the first lighting apparatus, the illumination detected by the optical sensor 6 becomes the first illumination. Furthermore, for example, when the optical sensor 6 is an image sensor, the value calculated by the central control device 100 based on the image that is captured by the image sensor becomes the first illumination or the second illumination. In addition, the calculation method of the second illumination will be described later, and thus the description thereof will be omitted.

Fig. 3 is a diagram that illustrates an example of the optical sensor in the first embodiment. In the example shown in Fig. 3, a case will be described where an optical sensor 31 is installed on an irradiation surface 30 using the first lighting apparatus, an optical sensor 32 is installed on the wall surface, and the entire space is that is captured by a mouth angle lens, a fish eye lens or the like. Furthermore, a case will be described where the optical sensor 31 is an illumination sensor and the optical sensor 32 uses an image sensor such as a camera. In this case, the optical sensor 31 for detecting the illumination of the irradiation surface 30 becoming the first illumination corresponds to the first optical sensor, and the optical sensor 32 for detecting the second illumination is the second optical sensor. In other words, in the case shown in Fig. 3, the optical sensor 31 detects the first illumination and the optical sensor 32 captures image information for calculating the second illumination.

A position of the optical sensor 6 for measuring the second illumination is supplemented. As mentioned above, the second illumination indicates the illumination at the measurement point based on the indirect light reaching the wall, the floor surface, the ceiling surface or the like by being reflected, and becomes an index of feeling of brightness of the lighting space. Under such circumstances, it is preferable that the image sensor as the optical sensor 6 be installed to include a lens of an angle of view capable of capturing the entire lighting space.

The wireless transmitter 7 receives the operation of a user to the lighting apparatus 5, and transmits the received operation contents to the wireless receiver 8 by a wireless communication. For example, the wireless transmitter 7 performs the transmission using an infrared light. The wireless receiver 8 receives the operation contents of a user transmitted from the wireless transmitter 7, and inputs the received operation contents to the central control device 100 via the transmission line 2. The person detection sensor 9 detects the presence or absence of a person. The person detection sensor 9 is, for example, an image sensor.

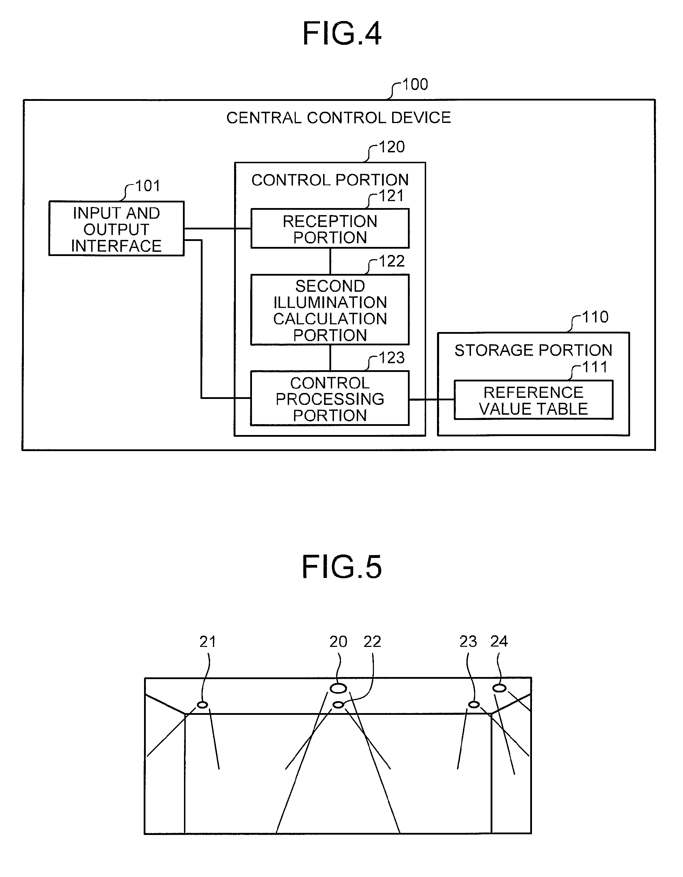

Fig. 4 is a block diagram that illustrates an example of a configuration of the central control device according to the first embodiment. In the example shown in Fig. 4, the central control device 100 includes an input and output interface 101, a storage portion 110, and a control portion 120. As will be described below in detail, the central control device 100 sets an observation portion for every image.

The input and output interface 101 is connected to the control portion 120. The input and output interface 101 performs the input and output of information together with the respective devices of the lighting control system 10 via the transmission line 2.

The storage portion 110 is connected to the control portion 120. The storage portion 110 stores the data used in various processes using the control portion 120. The storage portion 110 is, for example, a semiconductor device such as a RAM (Random Access Memory), a ROM (Read Only Memory), a flash memory, or a hard disk and an optical disk or the like. In the example shown in Fig. 4, the storage portion 110 includes a reference value table 111.

The reference value table 111 stores a first reference value regarding the first illumination which is the illumination of the irradiation surface irradiated by the plurality of lighting apparatuses 5. For example, the reference value table 111 stores an "X lux" as the first reference value. In addition, "X" of the "X lux" is an arbitrary number.

The control portion 120 is connected to the input and output interface 101 and the storage portion 110. The control portion 120 includes an internal memory which stores a program defining various process orders or the like, and controls various processes. The control portion 120 is, for example, an ASIC (Application Specific Integrated Circuit), an FPGA (Field Programmable Gate Array), a CPU (Central Processing Unit), an MPU (Micro Processing Unit) or the like. In the example shown in Fig. 4, the control portion 120 includes a reception portion 121, a second illumination calculation portion 122, and a control processing portion 123.

The reception portion 121 receives the detection result using the optical sensor 6. For example, the reception portion 121 receives image information for detecting the first illumination and the second illumination.

The second illumination calculation portion 122 calculates the second illumination by subtracting the illumination at the measurement point caused by the direct light due to the light sources of the plurality of lighting apparatuses 5 from the illumination at the measurement point based on the direct light and the reflected light due to the light sources of the plurality of lighting apparatuses 5. For example, the second illumination calculation portion 122 identifies a portion other than the portion corresponding to the direct light of the lighting apparatus from the image information for detecting the second illumination, and calculates the second illumination based on the pixel value of the identified portion. In addition, the pixel value used by the second illumination calculation portion 122 is, for example, a brightness value.

Fig. 5 is a diagram that illustrates an example of the image information for detecting the second illumination in the first embodiment. In the example shown in Fig. 5, a case is shown where the lighting apparatus 20, and the lighting apparatuses 21 to 24 are also captured in the image information. In addition, in the example shown in Fig. 5, a case is shown where the irradiation surface using the first lighting apparatus is not included. Herein, when the lighting apparatus 20 and the lighting apparatuses 21 to 24 are lighted, the image information of the portion corresponding to the lighting apparatus 20 and the lighting apparatuses 21 to 24 becomes the direct light from the lighting apparatuses. In this case, the second illumination calculation portion 122 calculates the second illumination based on the pixel value of the image portion other than the portion corresponding to the lighting apparatuses 20 to 24. In addition, as a method of identifying the image information other than the portion corresponding to the lighting apparatuses 20 to 24, an arbitrary image identification technology may be used. For example, when the positional information is included which identifies the position corresponding to the lighting apparatus in the image in advance, the control processing portion 123 identifies the position corresponding to the lighting apparatus using the positional information, and when the pixel value of the identified position is equal to or greater than a predetermined value, it is determined that the lighting apparatus is lighted, and the second illumination is calculated by excluding the identified position.

The control processing portion 123 controls the lighting states of the plurality of lighting apparatuses 5 based on the first illumination which is the illumination of the irradiation surface irradiated by the plurality of lighting apparatuses 5, and the second illumination which is the illumination at a certain measurement point in the lighting space irradiated by the light sources of the plurality of lighting apparatuses and is formed by the reflected light of light irradiated by the lighting apparatus. Specifically, the control processing portion 123 controls the lighting states of the plurality of lighting apparatuses 5, based on the first illumination received from the first optical sensor and the second illumination calculated by the second illumination calculation portion 122. For example, the control processing portion 123 controls the lighting states of the first lighting apparatus and the second lighting apparatus, based on the first illumination which is the illumination of the desktop or the floor surface, and the second illumination which is the illumination of the wall surface. That is, the control processing portion 123 performs the feedback control.

When describing a more detailed example, the control processing portion 123 reads the first reference value from the reference value table 111, and controls the lighting state of the first lighting apparatus so that the first illumination is the first reference value. Furthermore, the control processing portion 123 controls the lighting state of the second lighting apparatus among the plurality of lighting apparatuses, based on the second reference value decided on the basis of the first illumination. For example, when the first illumination is "10", the control processing portion 123 controls the lighting state of the second lighting apparatus so that the second illumination is about "1 to 2".

A case will be further described where the control is performed so that the second illumination is "1" when the first illumination is "10". In this case, the control processing portion 123 sets the second reference value as "first illumination/10" and controls the lighting state so that the second illumination is the second reference value.

In addition, as a method of controlling the lighting state, any method may be used. For example, the control processing portion 123 controls the lighting state, by outputting the instruction of raising the illumination and the instruction of lowering the illumination to the lighting apparatus 5 via the control terminal 4.

Herein, a relationship between the first illumination and the second illumination will be supplemented. When the first illumination is changed to "500 lux" and the second illumination is changed to "50 lux" to "100 lux", the ratio of 10:1 of the first illumination and the second illumination becomes the lower limit value in which a user realizes the feel of brightness. Under such circumstances, it is preferable that the ratio of the second illumination to the first illumination be higher than 10:1.

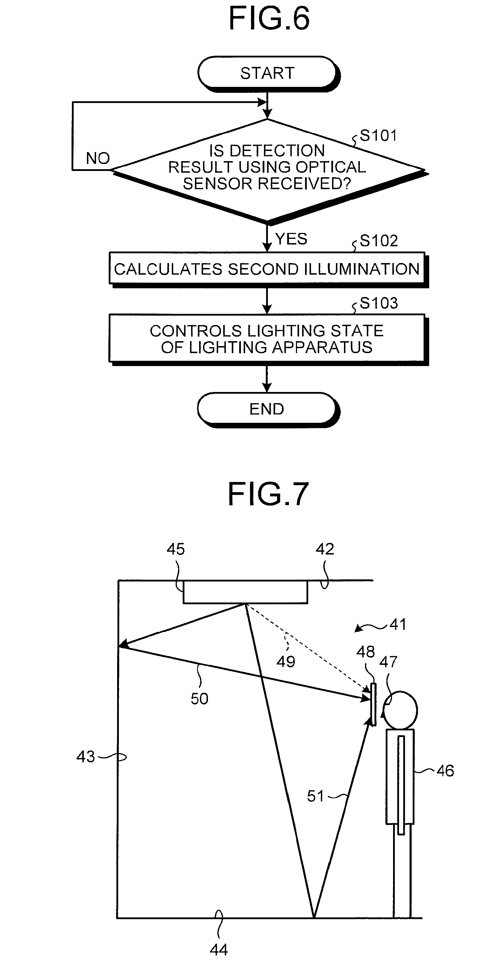

Fig. 6 is a flow chart that illustrates an example of a flow of the control processing using the central control device according to the first embodiment.

As shown in Fig. 6, in the central control device 100, when the reception portion 121 receives the detection result using the optical sensor 6 (Act 101 affirmation), the second illumination calculation portion 122 calculates the second illumination (Act 102). For example, the second illumination calculation portion 122 calculates the second illumination, by subtracting the illumination at the measurement point caused by the direct light due to the light sources of the plurality of lighting apparatuses 5 from the illumination at the measurement point based on the direct light and the reflected light due to the light sources of the plurality of lighting apparatuses 5.

Moreover, the control processing portion 123 controls the lighting state of the lighting apparatus 5 (Act 103). For example, the control processing portion 123 reads the first reference value from the reference value table 111, and performs the feed-back control of the lighting state of the first lighting apparatus so that the first illumination is the first reference value. Furthermore, the control processing portion 123 performs the feed-back control of the lighting state of the second lighting apparatus among the plurality lighting apparatuses based on the second reference value decided on the basis of the first illumination. For example, when the first illumination is "10", the control processing portion 123 controls the lighting state of the second lighting apparatus so that the second illumination is about "1 to 2". In addition, the relationship between the first illumination and the second illumination may be set to an arbitrary value depending on the object.

As mentioned above, the lighting control system 10 in the first embodiment includes the plurality of lighting apparatuses 5 and the central control device 100. The central control device 100 controls the lighting states of the plurality of lighting apparatuses 5, based on the first illumination which is the illumination of the irradiation surface irradiated by the light source of the first lighting apparatus 5 among the plurality of lighting apparatuses 5, and the second illumination which is the illumination at a certain measurement point in the lighting space irradiated by the light sources of the plurality of lighting apparatuses and is formed by the reflected light of light irradiated by the lighting apparatus.

That is, it is possible to control the feeling of brightness felt by a person, compared to a control method which places the illumination sensor in a position facing the specific lighting apparatus and controls the lighting state of the specific lighting apparatus based on the degree of brightness detected by the illumination sensor. For example, even if the desktop surface illumination is controlled, when the brightness around the wall or the like is dark, a person feels the darkness. Under such circumstances, the lighting control of the entire space is possible by controlling the lighting state of the lighting apparatus based on the first illumination and the second illumination. For example, in addition to the desktop surface illumination, by changing a dimming ratio of the lighting apparatus that irradiates the wall surface, the lighting control of the entire space is possible.

Furthermore, according to an embodiment, the lighting control system 10 according to the exemplary embodiment, the first lighting apparatus 5 among the plurality of lighting apparatuses 5 irradiates the desktop or the floor surface, and the second lighting apparatus 5 among the plurality of lighting apparatuses 5 mainly irradiates the wall surface. Furthermore, the control processing portion 123 controls the lighting states of the first lighting apparatus 5 and the second lighting apparatus 5, based on the first illumination which is the illumination of the desktop or the floor surface and the second illumination due to the indirect light in the measurement point. As a consequence, it is possible to improve the brightness felt by a person even if intensity irradiated to the entire space is the same. That is, it is possible to effectively control the brightness felt by a person.

Furthermore, according to an embodiment, in the lighting control system 10 according to the exemplary embodiment, the central control device 100 further includes a storage portion that stores the first reference value of the first illumination. Furthermore, the control processing portion controls the lighting state of the first lighting apparatus 5 so that the first illumination becomes the first reference value, and controls the lighting state of the second lighting apparatus 5 among the plurality of lighting apparatuses 5, based on the second reference value decided on the basis of the first illumination. As a consequence, it is possible to control the brightness felt by a person.

Furthermore, according to an embodiment, the lighting control system 10 according to the exemplary embodiment further includes the first optical sensor for measuring the first illumination, and the second optical sensor for measuring the second illumination. Furthermore, the control processing portion controls the lighting states of the plurality of lighting apparatuses 5, based on the first illumination received from the first optical sensor and the second illumination received from the second optical sensor. As a consequence, it is possible to control the brightness felt by a person.

Furthermore, according to an embodiment, in the lighting control system 10 according to the exemplary embodiment, the central control device 100 further includes the second illumination calculation portion that calculates the second illumination, by subtracting the illumination at the measurement point caused by the direct light due to the light sources of the plurality of lighting apparatuses 5, from the illumination at the measurement point based on the direct light and the reflected light due to the light sources of the plurality of lighting apparatuses 5. Furthermore, the control processing portion controls the lighting states of the plurality of lighting apparatuses 5, based on the first illumination and the second illumination calculated by the second illumination calculation portion. As a consequence, it is possible to control the brightness felt by a person.

Although the first embodiment is described, other embodiments may also be carried out without being limited thereto. Thus, hereinafter, other embodiments will be described.

In the embodiment mentioned above, although a case is described where the central control device 100 calculates the second illumination, but the exemplary embodiment is not limited thereto. For example, when the second light sensor 6 is an image sensor, a function of calculating the second illumination from the captured image may be equipped in the image sensor itself, and the second illumination may be output to the central control device 100 from the image sensor. In such a case, the control portion 120 of the central control device 100 does not need the second illumination calculation portion 122 and it is possible to reduce the processing load due to the control portion 120.

Furthermore, for example, in the embodiments mentioned above, although a case is described where the first optical sensor is different from the second optical sensor, the embodiments are not limited thereto. For example, the first illumination and the second illumination may be calculated using one optical sensor by installing the image sensor as the optical sensor and including the irradiation surface using the first lighting apparatus, the floor surface and the ceiling surface in the captured image using the image sensor.

In this case, the control portion 120 of the central control device 100 uses the illumination calculated based on the pixel value of the partial image corresponding to the irradiation surface among the images that are captured by the image sensor, as the first illumination. Furthermore, the control portion 120 uses the illumination calculated based on the pixel value of the partial image except the irradiation surface and the portion corresponding to the direct light of the plurality of lighting apparatuses, as the second illumination.

Furthermore, for example, in the embodiments mentioned above, although a case is described as an example where the second illumination is calculated based on the image information obtained by the optical sensor 6, the embodiment is not limited thereto. For example, the control portion 120 sets an observation set point on a predetermined set surface by setting a predetermined surface in the lighting space due to the plurality of lighting apparatuses 5, and may calculate the illumination at the observation set point only based on the indirect light due to the reflection object and set the illumination as the second illumination, on the basis of information regarding the reflection object reflecting the light in the lighting space and information regarding the lighting apparatus 5 provided in the lighting space.

In addition, the information regarding the reflection object reflecting the light in the lighting space is, for example, a ceiling, a wall and a floor that constitute the space, a position of the reflection surface of the object reflecting the light such as the installation object placed in the space, a size, a reflection ratio or the like. Furthermore, the information regarding the lighting apparatus 5 is, for example, the number and the position of the lighting apparatus 5, data of light distribution characteristics or the like of the lighting apparatus 5.

Fig. 7 is a diagram that illustrates an example of a second illumination calculation method. In the example shown in Fig. 7, a lighting space 41 is surrounded by a ceiling 42, a wall 43 and a floor 44. A lighting apparatus 45 is placed on the ceiling 42. A user 46 stands on the floor 44. Furthermore, herein, a vertical surface 48 is set just before eyes 47 of the user 46, and the vertical surface 48 is placed to be vertical to an eye line direction of the eyes 47 of the user 46. In the example shown in Fig. 7, a direct light 49 (a broken line) from the lighting apparatus 45, an indirect light 50 due to the wall 43, an indirect light 51 due to the floor 44 or the like is incident to the vertical surface 48.

In the example shown in Fig. 7, in the control portion 120, information regarding the ceiling 42, the wall 43, the floor 44 or the like is set in advance, information regarding the lighting apparatus 45, and the vertical surface 48 are set. Thus, the control portion 120 calculates the second illumination, for example, by calculating the illumination of light incident to the observation set point of the vertical surface 48, calculating the illumination of the direct light 49 incident to the vertical surface 48, and subtracting the illumination of the direct light 49 from the illumination of light incident to the vertical surface 48.

Furthermore, for example, in the embodiments mentioned above, although a case is described where the reference value table 111 stores the first reference value, and the control processing portion 123 controls the lighting state of the first lighting apparatus so that the first illumination becomes the first reference value, and controls the lighting state of the second lighting apparatus based on the second reference value decided on the basis of the first illumination, the exemplary embodiment is not limited thereto. For example, the reference value table 111 may store the second reference value of the second illumination. In this case, the control processing portion controls the lighting state of the second lighting apparatus so that the second illumination becomes the second reference value, and controls the lighting state of the first lighting apparatus based on the first reference value decided on the basis of the second illumination.

Furthermore, for example, in the embodiment mentioned above, although a case is described where the control portion 120 of the central control device performs the feedback processing, the control portion 120 may control the lighting states of the plurality of lighting apparatuses 5 by mounting a feedback circuit in an arbitrary position of the lighting control system, without being limited thereto.

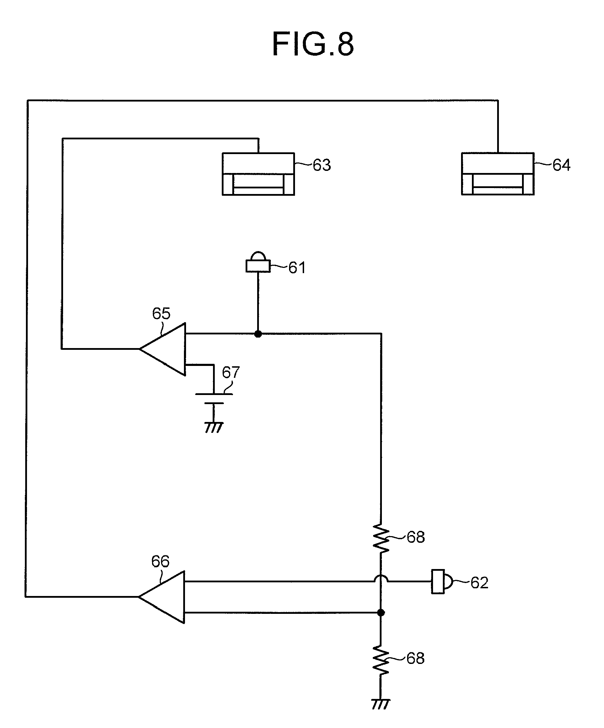

Fig. 8 is a diagram that illustrates an example of the feedback circuit. In the example shown in Fig. 8, although an example is descried where the lighting state of the first lighting apparatus is controlled so that the first illumination becomes the first reference value, and the lighting state of the second lighting apparatus is controlled based on the second reference value decided on the basis of the first illumination, as mentioned above, the embodiment is not limited thereto.

In the example shown in Fig. 8, the lighting control system includes a first illumination sensor 61 corresponding to the first optical sensor, a second illumination sensor 62 capable of measuring only the illumination due to the indirect light corresponding to the second optical sensor, a central portion apparatus 63 corresponding to the first lighting apparatus, a wall side apparatus 64 corresponding to the second lighting apparatus, and comparators 65 and 66. In the example shown in Fig. 8, the first illumination sensor 61 and the second illumination sensor 62 each output the voltage depending on the first illumination and the second illumination. Furthermore, in the comparator 65, a reference voltage 67 corresponding to the first reference value is input to one input of two inputs, and a voltage corresponding to the first illumination due to the first illumination sensor 61 is input to the other input thereof. Furthermore, in the comparator 66, the first illumination due to the first illumination sensor 61 is input to the one input of two inputs as the second reference value, after being reduced to 1/10 by a resistance 68. In addition, in the description mentioned above, although a case is described where the first illumination due to the first illumination sensor 61 is reduced to 1/10 by the resistance 68 and then is input, the embodiment is not limited thereto. A situation where the first illumination due to the first illumination sensor 61 is reduced to 1/10 by the resistance 68 is a situation where the first illumination and the second illumination are controlled to 10:1.

Herein, in the example shown in Fig. 8, the first illumination sensor 61 and the second illumination sensor 62 output the voltage depending on the illumination, the comparator 65 and the comparator 66 detect a difference in voltages between the first reference value and the second reference value and output the differential voltage to the central portion apparatus 63 and the wall side apparatus 64, and the central portion apparatus 63 and the wall side apparatus 64 change the lighting state in a direction eliminating the received differential voltage. In other words, the comparator 65 and the comparator 66 control the lighting state of the lighting apparatus by outputting the differential voltage.

Furthermore, for example, when there is a plurality of second lighting apparatuses, the second illumination may be controlled so as to become the second reference value, by individually adjusting the lighting state of the lighting apparatus.

For example, among the respective processings described in the first embodiment, all or a part of the processing described as being automatically performed can be manually performed, or all or a part of the processing described as being manually performed may be automatically performed using a known method. In addition, the processing sequence, the control sequence, the specific name, information including various data and parameters (for example, Figs. 1 to 8) described in the document mentioned above and the drawings can be arbitrarily changed except a specifically described case.

Furthermore, the respective components of each shown device is a functional concept, but is not necessarily physically constituted as shown. That is, the specific forms of the division and combination of each device are not limited to the forms as shown, but all or a part thereof can be constituted by being functionally or physically divided or combined by a certain unit, depending on various loads, use situations or the like. When describing Fig. 4 as an example, the storage portion 110 may be connected via the network as an external device.

As mentioned above, according to the embodiments mentioned above, since the control processing portion is included which controls the lighting states of the plurality of lighting apparatuses, based on the first illumination which is the illumination of the irradiation surface irradiated by the plurality of lighting apparatuses, and the second illumination which is the illumination of an arbitrary set point in the lighting space irradiated by the light sources of the plurality of lighting apparatuses and is formed by the reflected light of light emitted by the lighting apparatuses, it is possible to expect the control of the brightness felt by a person.

Although the exemplary embodiments have been described as mentioned above, the embodiments are present as an example but are not intended to limit the scope thereof. The embodiments can be carried out by various other forms, and various omissions, replacements and alternations can be performed without departing from the gist thereof. The embodiments and the modifications thereof are included in the scope and gist thereof, and are included in the description of the claims and equivalents thereof.

## Claims

1. A lighting control system (10) comprising:
a plurality of lighting apparatuses (5); and
a central control device (100) including a control processing portion (123) configured to control lighting states of the plurality of lighting apparatuses (5) based on a first illumination and a second illumination, the first illumination being an illumination of an irradiated surface irradiated by the plurality of lighting apparatuses (5), and the second illumination being an illumination at a certain measurement point in a lighting space irradiated by light sources of the plurality of lighting apparatuses (5) and the second illumination formed by a reflected light of light emitted by the lighting apparatuses (5).

2. The system (10) according to Claim 1, wherein
the central control device (100) further includes a storage (110) configured to store a first reference value of the first illumination, and
the control processing portion (123) controls a lighting state of a first lighting apparatus (5) so that the first illumination becomes the first reference value, and controls a lighting state of a second lighting apparatus (5) among the plurality of lighting apparatuses (5) based on a second reference value decided on the basis of the first illumination.

3. The system (10) according to Claim 1 or 2, wherein
the first lighting apparatus (5) among the plurality of lighting apparatuses (5) illuminate a desktop or a floor surface,
the second lighting apparatus (5) among the plurality of lighting apparatuses (5) illuminate a ceiling surface or a wall surface, and
the control processing portion (123) controls the lighting states of the first lighting apparatus (5) and the second lighting apparatus (5), based on the first illumination which is the illumination of the desktop or the floor surface, and the second illumination which is the illumination of the wall surface.

4. The system (10) according to any one of Claims 1 to 3, wherein
the central control device (100) further includes a storage (110) configured to store a second reference value of the second illumination, and
the control processing portion (123) controls the lighting state of the second lighting apparatus (5) among the plurality of lighting apparatuses (5) so that the second illumination becomes the second reference value, and controls the lighting state of the first lighting apparatus (5) based on the first reference value decided on the basis of the second illumination.

5. The system (10) according to any one of Claims 1 to 4, further comprising:
first optical sensors (6, 31 and 61) configured to measure the first illumination; and
second optical sensors (6, 32 and 62) configured to measure the second illumination, wherein
the control processing portion (123) controls the lighting states of the plurality of lighting apparatuses (5), based on the first illumination received from the first optical sensors (6, 31 and 61) and the second illumination received from the second optical sensors (6, 32 and 62).

6. The system (10) according to any one of Claims 1 to 5, further comprising:
an image sensor configured to measure the first illumination and the second illumination, wherein
the control processing portion (123) sets the illumination calculated based on a pixel value of a partial image corresponding to the irradiation surface among images that are captured by the image sensor as the first illumination, sets the illumination calculated based on a pixel value of a partial image except a portion corresponding to the irradiation surface and a direct light of the plurality of lighting apparatuses (5) as the second illumination, and controls the lighting states of the plurality of lighting apparatuses (5).

7. The system (10) according to any one of Claims 1 to 6, wherein
the central control device (100) further includes a second illumination calculation portion (122) configured to calculate the second illumination, by subtracting the illumination at the measurement point caused by the direct light due to the light sources of the plurality of lighting apparatuses (5) from the illumination at the measurement point based on the direct light and the reflected light due to the light sources of the plurality of lighting apparatuses (5), and
the control processing portion (123) controls the lighting states of the plurality of lighting apparatuses (5) based on the first illumination and the second illumination calculated by the second illumination calculation portion (122).

8. A central control device (100) comprising:
a control processing portion (123) configured to control lighting states of a plurality of lighting apparatuses (5) based on a first illumination and a second illumination, the first illumination being an illumination of an irradiated surface irradiated by the plurality of lighting apparatuses (5), and the second illumination being an illumination at a certain measurement point in a lighting space irradiated by light sources of the plurality of lighting apparatuses (5) and the second illumination formed by a reflected light of light emitted by the lighting apparatuses (5).

9. The device (100) according to Claim 8, further comprising:
a storage (110) configured to store a first reference value of the first illumination, wherein
the control processing portion (123) controls a lighting state of a first lighting apparatus (5) so that the first illumination becomes the first reference value, and controls a lighting state of a second lighting apparatus (5) among the plurality of lighting apparatuses (5) based on a second reference value decided on the basis of the first illumination.

10. The device (100) according to Claim 8 or 9, wherein
the first lighting apparatus (5) among the plurality of lighting apparatuses (5) illuminates a desktop or a floor surface,
the second lighting apparatus (5) among the plurality of lighting apparatuses (5) illuminates a ceiling surface or a wall surface, and
the control processing portion (123) controls the lighting states of the first lighting apparatus (5) and the second lighting apparatus (5), based on the first illumination which is the illumination of the desktop or the floor surface, and the second illumination which is the illumination of the wall surface.

11. The device (100) according to any one of Claims 8 to 10, further comprising:
a storage (110) configured to store a second reference value of the second illumination, wherein
the control processing portion (123) controls the lighting state of the second lighting apparatus (5) among the plurality of lighting apparatuses (5) so that the second illumination becomes the second reference value, and controls the lighting state of the first lighting apparatus (5) based on the first reference value decided on the basis of the second illumination.

12. The device (100) according to any one of Claims 8 to 11, wherein
the control processing portion (123) controls the lighting states of the plurality of lighting apparatuses (5), based on the first illumination received from first optical sensors (6, 31 and 61) configured to measure the first illumination and the second illumination received from second optical sensors (6, 32 and 62) configured to measure the second illumination.

13. The device (100) according to any one of Claims 8 to 12, wherein
the control processing portion (123) sets the illumination calculated based on a pixel value of a partial image corresponding to the irradiation surface among the images that are captured by an image sensor as the first illumination, sets the illumination calculated based on a pixel value of a partial image except a portion corresponding to the irradiation surface and a direct light of the plurality of lighting apparatuses (5) as the second illumination, and controls the lighting states of the plurality of lighting apparatuses (5).

14. The device (100) according to any one of Claims 8 to 13, further comprising:
a second illumination calculation portion (122) configured to calculate the second illumination, by subtracting the illumination at the measurement point caused by the direct light due to the light sources of the plurality of lighting apparatuses (5) from the illumination at the measurement point based on the direct light and the reflected light due to the light sources of the plurality of lighting apparatuses (5), wherein
the control processing portion (123) controls the lighting states of the plurality of lighting apparatuses (5), based on the first illumination and the second illumination calculated by the second illumination calculation portion (122).
